# EUROPÄISCHE PATENTSCHRIFT

(11) **EP 1 323 222 B1**
(45) Veröffentlichungstag und Bekanntmachung des Hinweises auf die Patenterteilung: **29.11.2006**
(21) Anmeldenummer: 01965250.2
(22) Anmeldetag: 05.09.2001
(51) Int. Cl.: H02J 3/38, H02J 3/28, H02J 3/32

(54) **INSELNETZ UND VERFAHREN ZUM BETRIEB EINES INSELNETZES**
ISLAND NETWORK AND METHOD FOR OPERATION OF AN ISLAND NETWORK
RESEAU POUR ILE ET PROCEDE D'EXPLOITATION D'UN RESEAU POUR ILE

(30) Priorität: 07.09.2000 DE 10044096
(43) Veröffentlichungstag der Anmeldung: 02.07.2003
(60) Teilanmeldung: 06100528.6
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/010191
(87) Internationale Veröffentlichungsnummer: WO 2002/021661

(56) Entgegenhaltungen:
- DE ZEUUW W. J., DE BONTE J. A. N.: "ON THE COMPONENTS OF A WIND TURBINE AUTONOMOUS ENERGY SYSTEM" PROCEEDINGS OF THE INTERNATIONAL CONFRENCE ON ELECTRICAL MACHINES, 18. - 21. September 1984, Seiten 193-196, XP001031999 LAUSANNE (SWITZERLAND)
- WICHERT B: "PV-diesel hybrid energy systems for remote area power generation--a review of current practice and future developments" RENEWABLE AND SUSTAINABLE ENERGY REVIEWS, ELSEVIERS SCIENCE, NEW YORK, NY, US, Bd. 1, Nr. 3, September 1997 (1997-09), Seiten 209-228, XP004268401 ISSN: 1364-0321
- BLEIJS ET AL: "A Wind/diesel System With Flywheel Energy Buffer" PROCEEDINGS OF IEEE/NTUA ATHENS POWER TECH CONFERENCE: "PLANNING OPERATION AND CONTROL OF TODAY'S ELECTRIC POWER SYSTEMS", 5. - 8. September 1993, Seiten 995-999, XP010278877 ATHENS, GREECE
- SNYMAN ET AL: "Analysis and experimental evaluation of a new MPPT converter topology for PV installations" SIGNAL PROCESSING AND SYSTEMS CONTROL, INTELLIGENT SENSORS AND INSTRUMENTATION. SAN DIEGO, NOV. 9 - 13, 1992, PROCEEDINGS OF THE INTERNATIONAL CONFERENCE ON INDUSTRIAL ELECTRONICS,CONTROL, INSTRUMENTATION AND AUTOMATION (IECON), NEW YORK, IEEE, US, Bd. 3 CONF. 18, 9. November 1992 (1992-11-09), Seiten 542-547, XP010060589 ISBN: 0-7803-0582-5
- DARRELMANN ET AL: "Alternative Power Storages" PROCEEDINGS OF TELESCON 97, "TELECOMMUNICATIONS ENERGY SPECIALIST CONFERENCE", 22. - 24. April 1997, Seiten 33-40, XP010268192 BUDAPEST, HUNGARY
- BINDNER H ET AL: "Increasing the Technical and Economic Performance of Wind Diesel Systems by Including Fresh Water Production" RENEWABLE ENERGY, PERGAMON PRESS, OXFORD, GB, Bd. 9, Nr. 1, 12. September 1996 (1996-09-12), Seiten 887-890, XP004048813 ISSN: 0960-1481
- SINHA A.: "MODELLING THE ECONOMICS OF COMBINED WIND/HYDRO/DIESEL POWER SYSTEMS" ENERGY CONVERSION MANGEMENT, Bd. 34, Nr. 7, 1993, Seiten 577-585, XP001041894 GREAT BRITAIN
- SCHEMPP ET AL: "Systems considerations in capacitive energy storage" ENERGY CONVERSION ENGINEERING CONFERENCE, 1996. IECEC 96., PROCEEDINGS OF THE 31ST INTERSOCIETY WASHINGTON, DC, USA 11-16 AUG. 1996, NEW YORK, NY, USA,IEEE, US, 11. August 1996 (1996-08-11), Seiten 666-671, XP010197808 ISBN: 0-7803-3547-3
- KABOURIS J ET AL: "Computational environment to investigate wind integration into small autonomous systems" RENEWABLE ENERGY, PERGAMON PRESS, OXFORD, GB, Bd. 18, Nr. 1, 2. September 1999 (1999-09-02), Seiten 61-75, XP004165817 ISSN: 0960-1481
- CASTRO GIL M., CRUZ CRUZ I.: "MONOGRAFIAS TECNICAS DE ENERGIAS RENOVABLES. ENERGIA EOLICA." 1997 , PROGENSA , SPAIN XP002185119 Seite 22 -Seite 39

## Beschreibung

Die vorliegende Erfindung betrifft ein elektrisches Inselnetz mit wenigstens einem Energieerzeuger, der mit einem ersten Generator gekoppelt ist. Ferner ist ein zweiter Generator vorgesehen, der mit einem Verbrennungsmotor gekoppelt werden kann. Bei solchen Inselnetzen ist der Energieerzeuger, der mit dem ersten Generator verbunden ist, häufig ein regenerativer Energieerzeuger, wie beispielsweise eine Windenergieanlage, ein Wasserkraftwerk etc.

Solche Inselnetze sind allgemein bekannt und dienen insbesondere der Stromversorgung von Gebieten, die nicht an ein zentrales Stromversorgungsnetz angeschlossen sind, in denen jedoch regenerative Energiequellen wie Wind und/oder Sonne und/oder Wasserkraft u.a. zur Verfügung stehen. Dies können zum Beispiel Inseln sein, oder abgelegene bzw. schwer zugängliche Gebiete mit Besonderheiten hinsichtlich Größe, Lage und/oder Witterungsverhältnissen. Auch in solchen Gebieten ist jedoch eine Strom-, Wasser- und Wärmeversorgung erforderlich. Die dafür notwendige Energie, zumindest die elektrische Energie, wird von dem Inselnetz bereitgestellt und verteilt. Dabei erfordern moderne elektrisch betriebene Geräte zur einwandfreien Funktion allerdings die Einhaltung relativ enger Grenzwerte bei Spannungs- und/oder Frequenzschwankungen im Inselnetz.

Um diese Grenzwerte einhalten zu können, werden unter anderem sogenannte WindDiesel-Systeme eingesetzt, bei denen eine Windenergieanlage als primäre Energiequelle eingesetzt wird. Die von der Windenergieanlage erzeugte Wechselspannung wird gleichgerichtet und anschließend Ober einen Wechselrichter in eine Wechselspannung mit der erforderlichen Netzfrequenz umgerichtet. Auf diese Weise wird eine von der Drehzahl des Generators der Windenergieanlage und damit von dessen Frequenz unabhängige Netzfrequenz erzeugt.

Aus dem Aufsatz von DE ZEUUW W. J., DE BONTE J. A. N.: 'ON THE COMPO-NENTS OF A WIND TURBINE AUTONOMOUS ENERGY SYSTEM' PROCEEDINGS OF INTERNATIONAL CONFERENCE ON ELECTRICAL MACHINES, 18. - 21. September 1984, Seiten 193-196, XP001031999 LAUSANNE (SWITZERLAND) ist ein Inselnetz mit mindestens einer Windenergieanlage und einem Dieselmotor mit Kupplung und Generator beschrieben. Wenn die Windenergieanlage nicht genügend Leistung tiefem kann. um die Leistungsnachfrage durch die Verbraucher des Inselnetzes zu befriedigen, wird der Dieselmotor mit dem entsprechenden Generator über eine Kupplung verbunden und speist zusätzliche Leistung ins Inselnetz ein. Übersteigt die aus dem Wind erzeugbare Leistung den momentanen Verbrauch der Verbraucher im lnselnetz, so wird entweder die Windenergieanlage gedrosselt oder die übersteigende Leistung wird vernichtet, oder anderweitig aus dem lnselnetz abgeführt. Nachteilig ist hierbei, dass bei einem Unterangebot von Windleistung in jedem Fall der Dieselmotor für Ausgleich sorgen muss und dass bei einem Überangebot von Windenergie der übersteigende Teil für das Inselnetz ungenutzt bleibt.

Der Aufsatz von BLEIJS ET AL: 'A Wind/diesel System With Flywheel Energy Buffer' PROCEEDINGS OF IEEEINTUA ATHENS POWER TECH CONFERENCE: 'PLAN-NING OPERATION AND CONTROL OF TODAY'S ELECTRIC POWER SYSTEMS', 5. - 8. September 1993, Seiten 995-999. XP010278877 ATHENS, GREECE offenbart ein Wind-/Dieselsystem mit Schwungradenergiepuffer. Das dort beschriebene Inselnetz umfasst zumindest einen festgeregelten Windgenerator, der allein abhängig vom jeweils vorhandenen Wind elektrische Leistung erzeugt. In dem Inselnetz ist ebenfalls ein Dieselgenerator vorgesehen, der bei einem Leistungsunterangebot seitens des Windgenerators weitere Leistung ins Netz speist. Weiterhin ist ein Schwungrad vorgesehen, das Leistungsspitzen sowohl bei einem Kurzzeitigen Leistungsüberangebot wie beispielsweise durch eine Böe als auch bei einer sprunghaften Leistungsnachfrage durch die Verbraucher des Inselnetzes glättet. Im Falle eines Leistungsüberangebotes durch die Windenergieanlage wird die hierdurch erzeugte überschüssige Energie in einer sogenannten "Dump Load" in Wärme umgesetzt. Auch dieses Konzept verlangt einen häufigen Einsatz des Dieselgenerators und bedingt eine schlechte Effizienz des Inselnetzes.

Die Netzfrequenz, wird demnach durch den Wechselrichter bestimmt. Hierbei stehen zwei unterschiedliche Varianten zur Verfügung. Die eine Variante ist ein sogenannter selbstgeführter Wechselrichter, der selbst in der Lage ist, eine stabile Netzfrequenz zu erzeugen. Solche selbstgeführten Wechselrichter erfordern jedoch einen hohen technischen Aufwand und sind entsprechend teuer. Eine alternative Variante zu selbstgeführten Wechselrichtern sind netzgeführte Wechselrichter, welche die Frequenz ihrer Ausgangsspannung mit einem vorhandenen Netz synchronisieren. Solche Wechselrichter sind erheblich preisgünstiger als selbstgeführte Wechselrichter, benötigen jedoch stets ein Netz, mit dem sie sich synchronisieren können. Daher muss für einen netzgeführten Wechselrichter stets ein Netzbildner verfügbar sein, der die zur Netzführung des Wechselrichters benötigten Stellgrößen bereitstellt. Ein solcher Netzbildner ist bei bekannten Inselnetzen zum Beispiel ein Synchrongenerator, der von einem Verbrennungsmotor (Dieselmotor) angetrieben wird.

Das bedeutet, dass der Verbrennungsmotor ständig laufen muss, um den Synchrongenerator als Netzbildner anzutreiben. Auch dies ist unter den Gesichtspunkten der Wartungsanforderungen, des Kraftstoffverbrauchs und der Belastung der Umwelt mit Abgasen nachteilig, denn auch wenn der Verbrennungsmotor nur einen Bruchteil seiner verfügbaren Leistung zum Antrieb des Generators als Netzbildner zur Verfügung stellen muss - die Leistung beträgt häufig nur 3 bis 5 kW - ist der Kraftstoffverbrauch nicht unerheblich und liegt bei mehreren Litern Kraftstoff pro Stunde.

Ein weiteres Problem besteht bei bekannten Inselnetzen auch darin, dass als sogenannte "Dump Loads" bezeichnete Blindlasten vorhanden sein müssten, die von dem Primärenergieerzeuger erzeugte überschüssige elektrische Energie verbrauchen, damit der Primärenergieerzeuger bei Abschaltungen von Verbrauchern nicht in einen Leerlaufbetrieb gelangt, der wiederum zu mechanischen Schäden beim Primärenergieerzeuger durch eine zu hohe Drehzahl führen kann. Dies ist insbesondere bei Windenergieanlagen als Primärenergieerzeugern sehr problematisch.

Der Erfindung liegt die Aufgabe zugrunde, die Nachteile der aus dem Stand der Technik bekannten Systeme zu vermeiden, den Wirkungsgrad eines Inselnetzes zu verbessern und insbesondere den Verbrauch an Brennstoff über den Verbrennungsmotor zu reduzieren.

Die Aufgabe wird erfindungsgemäß mit einem elektrischen Inselnetz mit dem Merkmal nach Anspruch 1 und ein Verfahren nach Anspruch 14 gelöst. Vorteilhafte Weiterbildungen sind in den Unteransprüchen beschrieben.

Der Erfindung liegt die Erkenntnis zugrunde, dass der zweite Generator, der die Funktion des Netzbildners hat, auch mit der elektrischen Energie des Primärenergieerzeugers (Windenergieanlage) angetrieben werden kann, so dass der Verbrennungsmotor völlig abgeschaltet und vom zweiten Generator abgekoppelt sein kann. Hierbei befindet also der zweite Generator nicht mehr im Generator, sondern im Motorbetrieb, wobei die hierzu benötigte elektrische Energie vom Primärenergieerzeuger bzw. dessen Generator geliefert wird. Ist die Kupplung zwischen dem zweiten Generator und dem Verbrennungsmotor eine elektromagnetische Kupplung, kann diese Kupplung durch Beaufschlagung mit elektrischer Energie des Primärenergieerzeugers bzw. dessen Generators betätigt werden. Wird die elektrische Energie an der Kupplung abgeschaltet, wird die Kupplung getrennt. Der zweite Generator wird dann, wie vorbeschrieben, bei abgeschaltetem Betrieb des Verbrennungsmotors mit elektrischer Energie vom Primärenergieerzeuger beaufschlagt und angetrieben (Motorbetrieb), so dass trotz abgeschalteten Verbrennungsmotors der Netzbildner in Betrieb bleibt. Sobald eine Zuschaltung des Verbrennungsmotors und damit der Generatorbetrieb des zweiten Generators erforderlich ist, kann der Verbrennungsmotor gestartet und mittels der elektrisch betätigbaren Kupplung mit dem zweiten Generator gekoppelt werden, um diesen anzutreiben, damit dieser zweite Generator im Generatorbetrieb zusätzliche Energie für das elektrische Inselnetz zur Verfügung stellen kann.

Der Einsatz einer voll regelbaren Windenergieanlage gestattet den Verzicht auf "Dump Loads", da die Windenergieanlage durch ihre vollständige Regelbarkeit, also variable Drehzahl und variable Blattverstellung, in der Lage ist, genau die benötigte Leistung zu erzeugen, so dass ein "Entsorgen" überschüssiger Energie nicht erforderlich ist, da die Windenergieanlage genau die benötigte Leistung erzeugt. Dadurch, dass die Windenergieanlage nur so viel Energie erzeugt, wie im Netz benötigt wird (oder zur weiteren Aufladung von Zwischenspeichern erforderlich ist), muss auch keine überschüssige Leistung nutzlos beseitigt werden und der gesamte Wirkungsgrad der Windenergieanlage aber auch des gesamten Inselnetzes ist erheblich besser als bei der Verwendung von "Dump Loads".

In einer bevorzugten Ausführungsform der Erfindung enthält die Windenergieanlage einen Synchrongenerator, dem ein Wechselrichter nachgeschaltet ist. Dieser Wechselrichter besteht aus einem Gleichrichter, einem Gleichspannungszwischenkreis und einem Frequenzumrichter. Ist noch eine weitere Gleichspannung (Gleichstrom) bereitstellende Energiequelle, beispielsweise ein Photovoltaikelement, im Inselnetz ausgebildet, so ist es zweckmäßig, dass solche weiteren Primärenergieerzeuger, wie Photovoltaikelemente, an den Gleichspannungszwischenkreis des Wechselrichters angeschlossen sind, so dass die Energie der zusätzlichen regenerativen Energiequelle im Gleichspannungszwischenkreis eingespeist werden kann. Dadurch kann das durch den ersten Primärenergieerzeuger verfügbare Leistungsangebot erhöht werden.

Um einerseits Schwankungen der verfügbaren Leistung und/oder eine erhöhte Leistungsnachfrage spontan auszugleichen und andererseits verfügbare Energie, die jedoch momentan nicht nachgefragt wird, nutzen zu können, sind bevorzugt Zwischenspeicher vorgesehen, welche elektrische Energie speichern und bei Bedarf schnell abgeben können. Solche Speicher können beispielsweise elektrochemische Speicher wie Akkumulatoren sein, aber auch Kondensatoren (Caps) oder auch chemische Speicher wie Wasserstoffspeicher, indem durch Elektrolyse mit der überschüssigen elektrischen Energie erzeugter Wasserstoff gespeichert wird. Zur Abgabe ihrer elektrischen Energie sind auch solche Speicher direkt oder über entsprechende Lade-/Entladungsschaltungen am Gleichspannungszwischenkreis des Wechselrichters angeschlossen.

Eine weitere Form der Energiespeicherung ist die Umwandlung in Rotationsenergie, die in einem Schwungrad gespeichert wird. Dieses Schwungrad ist in einer bevorzugten Weiterbildung der Erfindung mit dem zweiten Synchrongenerator gekoppelt und erlaubt somit ebenfalls, die gespeicherte Energie zum Antrieb des Netzbildners zu verwenden.

Sämtlichen Speichern kann elektrische Energie zugeführt werden, wenn der Energieverbrauch im Inselnetz geringer ist als das Leistungsvermögen des Primärenergieerzeugers, beispielsweise der Windenergieanlage. Wenn beispielsweise der Primärenergieerzeuger eine Windenergieanlage mit 1,5 MW Nennleistung oder ein Windpark mit mehreren Windenergieanlagen mit 10 MW Nennleistung ist und die Windverhältnisse so sind, dass der Primärenergieerzeuger im Nennbetrieb gefahren werden kann, gleichwohl die Leistungsaufnahme im Inselnetz deutlich geringer ist als die Nennleistung der Primärenergieerzeuger kann bei einem solchen Betrieb (insbesondere Nachts und in Zeiten geringen Verbrauchs im Inselnetz) der Primärenergieerzeuger so gefahren werden, dass sämtliche Energiespeicher aufgeladen (aufgefüllt) werden, um in Zeiten, wenn die Leistungsaufnahme des Inselnetzes größer als das Leistungsangebot des Primärenergieerzeugers, zunächst einmal - unter Umständen nur kurzzeitig - die Energiespeicher zuzuschalten.

In einer bevorzugten Weiterbildung der Erfindung sind alle Energieerzeuger und Zwischenspeicher mit Ausnahme des am zweiten Generator angeschlossenen Energiekomponenten (Verbrennungsmotor, Schwungrad) an einen gemeinsamen, busartig konfigurierten Gleichspannungszwischenkreis angeschlossen, der mit einem einzelnen, netzgeführten Umrichter (Wechselrichter) abgeschlossen ist. Durch die Verwendung eines einzelnen, netzgeführten Wechselrichters an einem Gleichspannungszwischenkreis wird eine sehr kostengünstige Anordnung geschaffen.

Ferner ist es vorteilhaft, wenn noch weitere (redundante) Verbrennungsmotoren und daran koppelbare dritte Generatoren (z.B. Synchrongeneratoren) vorgesehen sind, um bei einer größeren Leistungsnachfrage als durch die regenerative Energieerzeuger und Speicherenergie verfügbar ist, diese durch Betrieb der weiteren (redundanten) Erzeugungssysteme zu erzeugen.

Im Folgenden wird eine Ausführungsform der Erfindung beispielhaft näher erläutert. Dabei zeigen:
- Fig. 1: ein Prinzipschaltbild eines erfindungsgemäßen Inselnetzes;
- Fig. 2: eine Variante des in Figur 1 gezeigten Prinzips; und
- Fig. 3: eine bevorzugte Ausführungsform eines erfindungsgemäßen Inselnetzes.

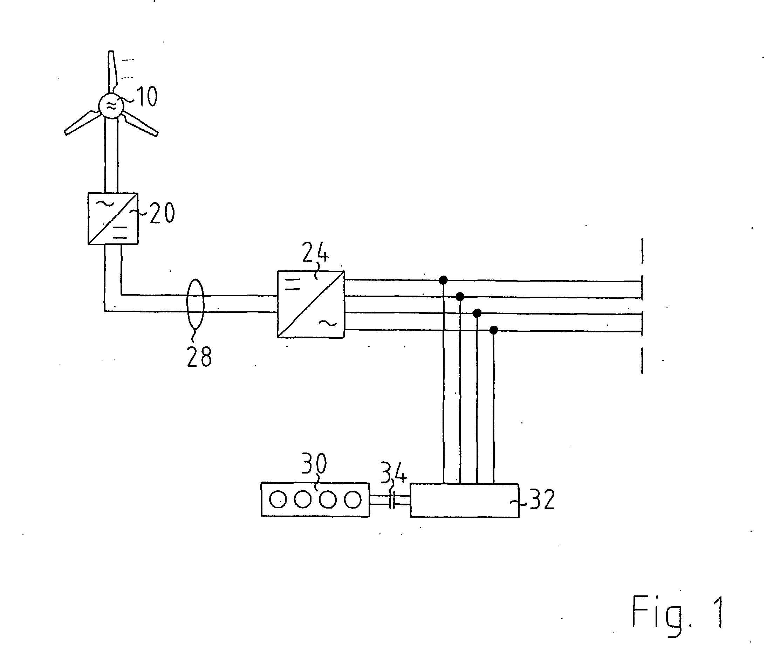

Figur 1 zeigt eine Windenergieanlage mit einem nachgeschalteten Umrichter, bestehend aus einem Gleichrichter 20, über den die Windenergieanlage an einen Gleichspannungszwischenkreis 28 angeschlossen ist, sowie einen am Ausgang des Gleichspannungszwischenkreises 28 angeschlossenen Wechselrichter 24.

Parallel zum Ausgang des Wechselrichters 24 ist ein zweiter Synchrongenerator 32 angeschlossen, der wiederum über eine elektromagnetische Kupplung 34 mit einem Verbrennungsmotor 30 verbunden ist. Die Ausgangsleitungen des Wechselrichters 24 und des zweiten Synchrongenerators 32 versorgen die (nicht dargestellten) Verbraucher mit der benötigten Energie.

Dazu erzeugt die Windenergieanlage 10 die Leistung zur Versorgung der Verbraucher. Die von der Windenergieanlage 10 erzeugte Energie wird durch den Gleichrichter 20 gleichgerichtet und in den Gleichspannungszwischenkreis 28 eingespeist.

Der Wechselrichter 24 erzeugt aus der anliegenden Gleichspannung eine Wechselspannung und speist sie in das Inselnetz ein. Da der Wechselrichter 24 aus Kostengründen bevorzugt als netzgeführter Wechselrichter ausgeführt ist, ist ein Netzbildner vorhanden, mit dem sich der Wechselrichter 24 synchronisieren kann.

Dieser Netzbildner ist der zweite Synchrongenerator 32. Dieser Synchrongenerator 32 arbeitet bei abgeschaltetem Verbrennungsmotor 30 im Motorbetrieb und wirkt dabei als Netzbildner. Die Antriebsenergie ist in diesem Betriebsmodus elektrische Energie von der Windenergieanlage 10. Diese Antriebsenergie für den Synchrongenerator 32 muss die Windenergieanlage 10 ebenso wie die Verluste des Gleichrichters 20 und des Wechselrichters 24 zusätzlich erzeugen.

Neben der Funktion als Netzbildner erfüllt der zweite Synchrongenerator 32 weitere Aufgaben, wie die Blindleistungserzeugung im Netz, die Lieferung von KurzschlussStrom, Wirkung als Flickerfilter und die Spannungsregelung.

Werden Verbraucher abgeschaltet und sinkt daher der Energiebedarf, so wird die Windenergieanlage 10 derart gesteuert, dass sie entsprechend weniger Energie erzeugt, so daß die Verwendung von Dump Loads verzichtbar ist.

Steigt der Energiebedarf der Verbraucher so weit an, dass dieser von der Windenergieanlage allein nicht mehr gedeckt werden kann, kann der Verbrennungsmotor 28 anlaufen und die elektromagnetische Kupplung 34 wird mit einer Spannung beaufschlagt. Dadurch stellt die Kupplung 34 eine mechanische Verbindung zwischen dem Verbrennungsmotor 30 und dem zweiten Synchrongenerator 32 her und der Generator 32 (und Netzbildner) liefert (jetzt im Generatorbetrieb) die benötigte Energie.

Durch eine geeignete Dimensionierung der Windenergieanlage 10 kann erreicht werden, dass im Mittel ausreichend Energie aus Windenergie zur Versorgung der Verbraucher bereitgestellt wird. Dadurch ist der Einsatz des Verbrennungsmotors 30 und der damit einhergehende Brennstoffverbrauch auf ein Minimum reduziert.

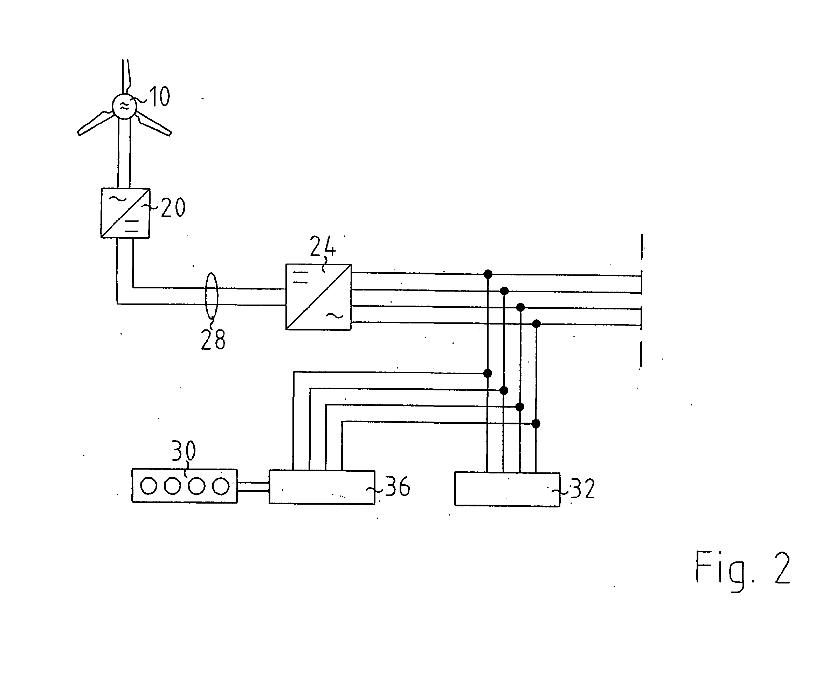

In Figur 2 ist eine Variante des in Figur 1 gezeigten Inselnetzes gezeigt. Der Aufbau entspricht im wesentlichen der in Figur 1 gezeigten Lösung. Der Unterschied besteht darin, dass hier dem zweiten Generator 32, der als Netzbildner wirkt, kein Verbrennungsmotor 30 zugeordnet ist. Der Verbrennungsmotor 30 ist mit einem weiteren, dritten (Synchron-)Generator 36 verbunden, der bei Bedarf zuschaltbar ist. Der zweite Synchrongenerator 32 arbeitet also ständig im Motorbetrieb als Netzbildner, Blindleistungserzeuger, Kurzschlussstrom-Quelle, Flickerfilter und Spannungsregler.

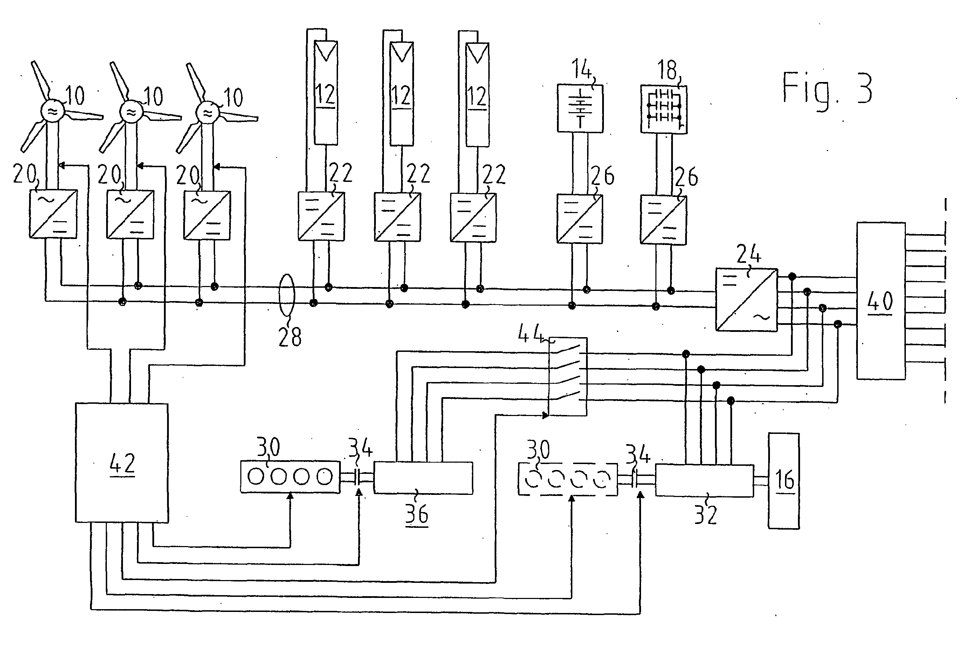

In Figur 3 ist eine weitere bevorzugte Ausführungsform eines Inselnetzes gezeigt. In dieser Figur sind drei Windenergieantagen 10 - die zum Beispiel einen Windpark bilden - mit ersten (Synchron-)Generatoren dargestellt, die jeweils an einen Gleichrichter 20 angeschlossen sind. Die Gleichrichter 20 sind an der Ausgangsseite parallel geschaltet und speisen die von den Windenergieanlagen 10 erzeugte Energie in einen Gleichspannungszwischenkreis 28 ein.

Weiterhin sind drei Photovoltaikelemente 12 dargestellt, die jeweils an einen Hochsetzsteller 22 angeschlossen sind. Die Ausgangsseiten der Hochsetzsteller 22 sind parallel ebenfalls an den Gleichspannungszwischenkreis 28 angeschlossen.

Weiterhin ist ein Akkumulatorblock 14 dargestellt, der symbolisch für einen Zwischenspeicher steht. Dieser Zwischenspeicher kann neben einem elektrochemischen Speicher wie dem Akkumulator 14 ein chemischer wie ein Wasserstoffspeicher (nicht dargestellt) sein. Der Wasserstoffspeicher kann zum Beispiel mit Wasserstoff beschickt werden, der durch Elektrolyse gewonnen wird.

Daneben ist ein Kondensatorblock 18 dargestellt, der die Möglichkeit zeigt, geeignete Kondensatoren als Zwischenspeicher zu verwenden. Diese Kondensatoren können zum Beispiel sogenannte Ultra-Caps der Fa. Siemens sein, die sich neben einer hohen Speicherkapazität durch geringe Verluste auszeichnen.

Akkumulatorblock 14 und Kondensatorblock 18 (beide Blöcke können auch mehrzahlig ausgebildet sein) sind jeweils über Lade/Entladeschaltungen 26 an den Gleichspannungszwischenkreis 28angeschlossen. DerGleichspannungszwischenkreis 28 ist mit einem (einzigen) Wechselrichter 24 (oder einer Mehrzahl parallelgeschalteter Wechselrichter) abgeschlossen, wobei der Wechselrichter 24 bevorzugt netzgeführt ausgebildet ist.

An der Ausgangsseite des Wechselrichters 24 ist eine Verteilung 40 (eventuell mit Transformator) angeschlossen, die von dem Wechselrichter 24 mit der Netzspannung versorgt wird. An der Ausgangsseite des Wechselrichters 24 ist ebenfalls ein zweiter Synchrongenerator 32 angeschlossen. Dieser Synchrongenerator 32 ist der Netzbildner, Blindleistungs- und Kurzschlussstrom-Erzeuger, Flickerfilter und Spannungsregler des Inselnetzes.

Mit dem zweiten Synchrongenerator 32 ist ein Schwungrad 1 6 gekoppelt. Dieses Schwungrad 16 ist ebenfalls ein Zwischenspeicher und kann zum Beispiel während des motorischen Betriebs des Netzbildners Energie speichern.

Zusätzlich können dem zweiten Synchrongenerator 32 ein Verbrennungsmotor 30 und eine elektromagnetische Kupplung 34 zugeordnet sein, die bei zu geringer Leistung aus regenerativen Energiequellen den Generator 32 antreiben und im Generatorbetrieb betreiben. Auf diese Weise kann fehlende Energie in das Inselnetz eingespeist werden.

Der dem zweiten Synchrongenerator 32 zugeordnete Verbrennungsmotor 30 und die elektromagnetische Kupplung 34 sind gestrichelt dargestellt, um zu verdeutlichen, dass der zweite Synchrongenerator 32 alternativ nur im Motorbetrieb (und gegebenenfalls mit einem Schwungrad als Zwischenspeicher) als Netzbildner, Blindleistungserzeuger, Kurzschlussstrom-Quelle, Flickerfilter und Spannungsregelung betrieben werden kann.

Insbesondere wenn der zweite Synchrongenerator 32 ohne Verbrennungsmotor 30 vorgesehen ist, kann ein dritter Synchrongenerator 36 mit einem Verbrennungsmotor vorgesehen sein, um eine länger andauernde Leistungslücke auszugleichen. Dieser dritte Synchrongenerator 36 kann durch eine Schalteinrichtung 44 im Ruhezustand vom Inselnetz getrennt werden, um nicht als zusätzlicher Energieverbraucher das Inselnetz zu belasten.

Schließlich ist eine (µp/Computer-)Steuerung 42 vorgesehen, welche die einzelnen Komponenten des Inselnetzes steuert und so einen weitgehend automatisierten Betrieb des Inselnetzes erlaubt.

Durch eine geeignete Auslegung der einzelnen Komponenten des Inselnetzes kann erreicht werden, dass die Windenergieanlagen 10 im Mittel ausreichend Energie für die Verbraucher bereitstellen. Dieses Energieangebot wird gegebenenfalls durch die Photovoltaikelemente ergänzt.

Ist das Leistungsangebot der Windenergieanlagen 10 und/oder der Photovoltaikelemente 12 geringer/größer als der Bedarf der Verbraucher, können die Zwischenspeicher 14, 16, 18 beansprucht (entladen/geladen) werden, um entweder die fehlende Leistung bereitzustellen (entladen) oder die überschüssige Energie zu speichern (laden). Die Zwischenspeicher 14, 16, 18 glätten also das stets schwankende Angebot der regenerativen Energien.

Dabei ist es wesentlich von der Speicherkapazität der Zwischenspeicher 14, 16, 18 abhängig, über welchen Zeitraum welche Leistungsschwankung ausgeglichen werden kann. Als Zeitraum kommen bei großzügiger Dimensionierung der Zwischenspeicher einige Stunden bis zu einigen Tagen in Betracht.

Erst bei Leistungslücken, welche die Kapazitäten der Zwischenspeicher 14, 16, 18 überschreiten, ist eine Zuschaltung der Verbrennungsmotoren 30 und der zweiten bzw. dritten Synchrongeneratoren 32, 36 erforderlich.

In der vorstehenden Beschreibung der Ausführungsbeispiele ist der Primärenergieerzeuger stets ein solcher, welcher eine regenerative Energiequelle, wie beispielsweise Wind oder Sonne (Licht), nutzt. Der Primärenergieerzeuger kann allerdings sich auch einer anderen regenerativen Energiequelle, zum Beispiel Wasserkraft, bedienen oder auch ein Erzeuger sein, welcher fossile Brennstoffe verbraucht.

Auch kann an das Inselnetz eine Meerwasserentsalzungsanlage (nicht dargestellt) angeschlossen sein, so dass in Zeiten, in denen die Verbraucher am Inselnetz deutlich weniger elektrische Leistung benötigen als die Primärenergieerzeuger bereitstellen können, die Meerwasserentsalzungsanlage die "überschüssige", also noch bereitzustellende elektrische Leistung verbraucht, um Brauchwasser/Trinkwasser zu erzeugen, welches dann in Auffangbecken gespeichert werden kann. Sollte zu gewissen Zeiten der elektrische Energieverbrauch des Inselnetzes so groß sein, dass alle Energieerzeuger nur gerade in der Lage sind, diese Leistung zur Verfügung zu stellen, wird die Meerwasserentsalzungsanlage auf ein Minimum heruntergefahren, gegebenenfalls sogar ganz abgeschaltet. Auch die Steuerung der Meerwasserentsalzungsanlage kann über die Steuerung 42 erfolgen.

In Zeiten, in denen die elektrische Leistung der Primärenergieerzeuger nur zum Teil vom elektrischen Netz benötigt wird, kann auch ein - ebenfalls nicht dargestelltes - Pumpspeicherwerk betrieben werden, mittels dem Wasser (oder andere Flüssigkeitsmedien) von einem niederen auf ein höheres Potential gebracht werden, so dass im Bedarfsfall auf die elektrische Leistung des Pumpspeicherwerks zugegriffen werden kann. Auch die Steuerung des Pumpspeicherwerks kann über die Steuerung 42 erfolgen.

Es ist auch möglich, dass die Meerwasserentsalzungsanlage und ein Pumpspeicherwerk kombiniert werden, indem also das von der Meerwasserentsalzungsanlage erzeugte Brauchwasser (Trinkwasser) auf ein höheres Niveau gepumpt wird, welches dann zum Antrieb der Generatoren des Pumpspeicherwerks im Bedarfsfall herangezogen werden kann.

## Patentansprüche

1. Elektrisches Inselnetz mit wenigstens einem ersten Energieerzeuger, der eine regenerative Energiequelle nutzt, wobei der Energieerzeuger eine Windenergieanlage mit einem Generator ist, der einem Umrichter nachgeschaltet ist, wobei ein zweiter Generator vorgesehen ist, welcher mit einem Verbrennungsmotor über eine elektromagnetische Kupplung koppelbar ist, zur Verwendung als Netzbildner und wobei die Windenergieanlage hinsichtlich ihrer Drehzahl und Blattverstellung regelbar ist, wobei der Umrichter aus einem Gleichrichter, einem Gleichspannungszwischenkreis und einem Wechselrichter besteht,
**dadurch gekennzeichnet, dass**
a) wenigstens ein an den Gleichspannungszwischenkreis angeschlossenes elektrisches Element zur Einspeisung elektrischer Energie mit Gleichspannung vorgesehen ist,
b) Mittel zur Regelung der Windenergieanlage durch die Drehzahl und Blattverstellung vorgesehen sind, so dass die Windenergieanlage stets nur die benötigte elektrische Leistung erzeugt, wobei sich die benötigte elektrische Leistung zusammensetzt aus dem Verbrauch der elektrischen Leistung im Netz sowie dem Leistungsbedarf zum Aufladen des elektrischen Zwischenspeichers,
c) und dass bei Unterschreiten der erzeugten Leistung der Windenergieanlage unter die benötigte Leistung zunächst nicht Netzleistung durch den Verbrennungsmotor zur Verfügung gestellt, sondern zunächst der elektrische Zwischenspeicher (14, 16, 18) zur Energieabgabe an das Netzt herangezogen wird.

2. Elektrisches Inselnetz nach Anspruch 1,
**dadurch gekennzeichnet, dass** das elektrische Element ein Photovoltaikelement und/oder ein mechanischer Energiespeicher und/oder ein elektrochemischer Speicher und/oder ein Kondensator und/oder ein chemischer Speicher in Verbindung mit Elektrolyse und einer Lade-/Entladungsschaltung als elektrischer Zwischenspeicher ist.

3. Elektrisches Inselnetz nach einem der vorhergehenden Ansprüche,
**gekennzeichnet durch** ein Schwungrad, welches mit dem zweiten oder einem dritten Generator koppelbar ist.

4. Elektrisches Inselnetz nach einem der vorhergehenden Ansprüche,
**gekennzeichnet durch** mehrere Verbrennungsmotoren, die jeweils mit einem Generator gekoppelt werden können.

5. Elektrisches Inselnetz nach einem der vorhergehenden Ansprüche,
**gekennzeichnet durch** eine Steuerung zum Steuern des Inselnetzes.

6. Elektrisches Inselnetz nach einem der vorhergehenden Ansprüche,
**gekennzeichnet durch** einen Hochsetz-/Tiefsetzsteller (22) zwischen dem elektrischen Element und dem Gleichspannungszwischenkreis.

7. Elektrisches Inselnetz nach einem der vorhergehenden Ansprüche,
**gekennzeichnet durch** Lade-/Entladeschaltungen (26) zwischen dem elektrischen Speicherelement und dem Gleichspannungszwischenkreis.

8. Elektrisches Inselnetz nach einem der vorhergehenden Ansprüche,
**gekennzeichnet durch** ein Schwungrad mit einem Generator und einem nachgeschalteten Gleichrichter (20) zur Einspeisung elektrischer Energie in den Gleichspannungszwischenkreis (28).

9. Elektrisches Inselnetz nach einem der vorhergehenden Ansprüche,
**dadurch gekennzeichnet, dass** sämtliche regenerativen Energiequellen nutzende Energieerzeuger (10, 12) und Zwischenspeicher (14, 16, 18) einen gemeinsamen Gleichspannungszwischenkreis speisen.

10. Elektrisches Inselnetz nach einem der vorhergehenden Ansprüche,
**gekennzeichnet durch** einen netzgeführten Wechselrichter.

11. Elektrisches Inselnetz nach einem der vorhergehenden Ansprüche,
**dadurch gekennzeichnet, dass** die Energie zum Betrieb der elektromagnetischen Kupplung durch einen elektrischen Speicher und/oder durch den Primärenergieerzeuger zur Verfügung gestellt wird.

12. Inselnetz nach einem der vorhergehenden Ansprüche,
**dadurch gekennzeichnet, dass** am Inselnetz eine Meerwasserentsalzungs/Brauchwassererzeugungsanlage angeschlossen ist, welche Brauchwasser (Trinkwasser) erzeugt, wenn das Leistungsangebot der Primärenergieerzeuger größer ist als der Leistungsverbrauch der anderen am Inselnetz angeschlossenen elektrischen Verbraucher.

13. Inselnetz nach einem der vorhergehenden Ansprüche,
**dadurch gekennzeichnet, dass** ein Pumpspeicherwerk vorgesehen ist, welches seine elektrische Energie von dem Primärenergieerzeuger erhält.

14. Verfahren zum Regeln eines elektrischen Inselnetzes mit wenigstens einem ersten Energieerzeuger, der eine regenerative Energiequelle nutzt, wobei der Energieerzeuger eine Windenergieanlage mit einem Generator ist, wobei ein zweiter Generator vorgesehen ist, welcher mit einem Verbrennungsmotor über eine elektromagnetische Kupplung koppelbar ist zur Verwendung als Netzbildner, und ein elektrisches Element als Zwischenspeicher, umfassend die Schritte:
Regeln der Windenergieanlage hinsichtlich ihrer Drehzahl und Blattverstellung, Steuern der Windenergieanlage derart, dass sie stets nur die benötigte elektrische Leistung erzeugt, wobei sich die benötigte elektrische Leistung zusammensetzt aus dem Verbrauch der elektrischen Leistung im Netz sowie dem Leistungsbedarf zum Aufladen des elektrischen Elements als Zwischenspeicher,
Einschalten des Verbrennungsmotors nur dann, wenn die von den regenerative Energiequellen nutzenden Energieerzeuger (10, 12) und/oder die von elektrischen Zwischenspeichern (14, 16, 18) abgegebene Leistung einen vorgebbaren Schwellwert für einen vorgebbaren Zeitabschnitt unterschreiten.

15. Verfahren nach Anspruch 14,
**dadurch gekennzeichnet, dass** zum Laden der Zwischenspeicher aus regenerativen Energiequellen mehr Energie erzeugt wird als für die Verbraucher am Netz benötigt wird.

## Claims

1. Isolated electrical grid having at least one first energy producer that uses a renewable energy source, wherein the energy producer is a wind energy system having a generator connected downstream of a converter, wherein a second generator, which can be coupled to an internal combustion engine via an electromagnetic clutch, is provided for use as a grid former and wherein the wind energy system can be regulated with regard to its revolution speed and blade adjustment, wherein the converter consists of a rectifier, a dc link and an inverter, **characterised in that**
a) at least one electrical element connected to the dc link is provided for feeding in electrical energy with dc voltage,
b) means for regulating the wind energy system by the revolution speed and blade adjustment are provided, so that the wind energy system always produces only the required electrical power, the required electrical power being made up of the consumption of the electrical power in the grid and the power required to charge the electrical intermediate storage device,
c) and, when the generated power of the wind energy system falls below the required power, rather than grid power first being made available by the internal combustion engine, first the electrical intermediate storage device (14, 16, 18) is used to deliver energy to the grid.

2. Isolated electrical grid according to claim 1,
**characterised in that** the electrical element is a photovoltaic element and/or a mechanical energy storage device and/or an electrochemical storage device and/or a capacitor and/or a chemical storage device in conjunction with electrolysis and a charging/discharging circuit, forming an electrical intermediate storage device.

3. Isolated electrical grid according to either one of the preceding claims,
**characterised by** a flywheel that can be coupled to the second or a third generator.

4. Isolated electrical grid according to any one of the preceding claims,
**characterised by** a plurality of internal combustion engines each of which can be coupled to a generator.

5. Isolated electrical grid according to any one of the preceding claims,
**characterised by** a controller for controlling the isolated grid.

6. Isolated electrical grid according to any one of the preceding claims,
**characterised by** a step-up/step-down converter (22) between the electrical element and the dc link.

7. Isolated electrical grid according to any one of the preceding claims,
**characterised by** charging/discharging circuits (26) between the electrical storage element and the dc link.

8. Isolated electrical grid according to any one of the preceding claims,
**characterised by** a flywheel with a generator and a downstream rectifier (20) for feeding electrical energy into the dc link (28).

9. Isolated electrical grid according to any one of the preceding claims,
**characterised in that** all the energy producers (10, 12) using renewable energy sources and all the intermediate storage devices (14, 16, 18) feed a common dc link.

10. Isolated electrical grid according to any one of the preceding claims,
**characterised by** a line-commutated inverter.

11. Isolated electrical grid according to any one of the preceding claims,
**characterised in that** the energy for operating the electromagnetic clutch is made available by an electrical storage device and/or by the primary energy producer.

12. Isolated electrical grid according to any one of the preceding claims,
**characterised in that** there is connected to the isolated grid a seawater desalination/service water production plant which produces service water (drinking water) when the power supplied by the primary energy producer is greater than the power consumption of the other electrical loads connected to the isolated grid.

13. Isolated electrical grid according to any one of the preceding claims,
**characterised in that** a pump storage device is provided which receives its electrical energy from the primary energy producer.

14. Method for regulating an isolated electrical grid having at least one first energy producer that uses a renewable energy source, wherein the energy producer is a wind energy system having a generator, wherein a second generator, which can be coupled to an internal combustion engine via an electromagnetic clutch, is provided for use as a grid former, and an electrical element is provided as an intermediate storage device, comprising the steps of:
regulating the wind energy system with regard to its revolution speed and blade adjustment, controlling the wind energy system in such a manner that it always produces only the required electrical power, the required electrical power being made up of the consumption of the electrical power in the grid and the power required to charge the electrical element forming the intermediate storage device,
switching on the internal combustion engine only when the power delivered by the energy producers (10, 12) using renewable energy sources and/or the power delivered by the electrical intermediate storage devices (14, 16, 18) fall below a predetermined threshold for a predeterminable period of time.

15. A method according to claim 14,
**characterised in that**, for charging the intermediate storage devices from renewable energy sources, more energy is produced than is required for the loads on the grid.

## Revendications

1. Réseau électrique indépendant avec au moins un premier producteur d'énergie qui utilise une source d'énergie renouvelable, le producteur d'énergie étant une installation d'énergie éolienne dotée d'un générateur auquel un convertisseur de fréquence est branché en aval, un deuxième générateur étant prévu, lequel peut être couplé à un moteur à combustion interne par l'intermédiaire d'un accouplement électromagnétique, pour être utilisé comme créateur de réseau, et l'installation d'énergie éolienne étant réglable en ce qui concerne sa vitesse de rotation et la modification du réglage des pales, le convertisseur de fréquence se composant d'un redresseur de courant, d'un circuit intermédiaire à tension continue et d'un onduleur,
**caractérisé en ce que**
a) au moins un élément électrique raccordé au circuit intermédiaire à tension continue est prévu pour alimenter ce dernier en énergie électrique d'une tension continue,
b) des moyens sont prévus pour régler l'installation d'énergie éolienne par la vitesse de rotation et la modification du réglage des pales, de sorte que l'installation d'énergie éolienne ne produise continuellement que la puissance électrique nécessaire, la puissance électrique nécessaire étant constituée de la consommation de la puissance électrique dans le réseau ainsi que du besoin en énergie pour charger l'accumulateur électrique intermédiaire,
c) et **en ce que**, lorsque la puissance produite de l'installation d'énergie éolienne est inférieure à la puissance nécessaire, la puissance du réseau n'est pas immédiatement mise à disposition par le biais du moteur à combustion interne, mais l'accumulateur électrique intermédiaire (14, 16, 18) est tout d'abord raccordé au réseau pour fournir de l'énergie.

2. Réseau électrique indépendant selon la revendication 1,
**caractérisé en ce que** l'élément électrique est un élément photovoltaïque et/ou un accumulateur d'énergie mécanique et/ou un accumulateur électrochimique et/ou un condensateur et/ou un accumulateur chimique en liaison avec une électrolyse et un raccordement de charge/décharge en tant qu'accumulateur électrique intermédiaire.

3. Réseau électrique indépendant selon l'une quelconque des revendications précédentes,
**caractérisé par** un volant d'inertie, qui peut être couplé au deuxième ou au troisième générateur.

4. Réseau électrique indépendant selon l'une quelconque des revendications précédentes,
**caractérisé par** plusieurs moteurs à combustion interne qui peuvent être respectivement couplés à un générateur.

5. Réseau électrique indépendant selon l'une quelconque des revendications précédentes,
**caractérisé par** un système de commande pour commander le réseau indépendant.

6. Réseau électrique indépendant selon l'une quelconque des revendications précédentes,
**caractérisé par** un rehausseur/abaisseur de tension (22) entre l'élément électrique et le circuit intermédiaire à tension continue.

7. Réseau électrique indépendant selon l'une quelconque des revendications précédentes,
**caractérisé par** des raccordements de charge/décharge (26) entre l'élément accumulateur électrique et le circuit intermédiaire à tension continue.

8. Réseau électrique indépendant selon l'une quelconque des revendications précédentes,
**caractérisé par** un volant d'inertie équipé d'un générateur et d'un redresseur (20) branché en aval pour acheminer de l'énergie électrique dans le circuit intermédiaire à tension continue (28).

9. Réseau électrique indépendant selon l'une quelconque des revendications précédentes,
**caractérisé en ce que** tous les producteurs d'énergie (10, 12) et accumulateurs intermédiaires (14, 16, 18) utilisant des sources d'énergie renouvelables, alimentent un circuit intermédiaire commun à tension continue.

10. Réseau électrique indépendant selon l'une quelconque des revendications précédentes,
**caractérisé par** un onduleur commuté par le réseau.

11. Réseau électrique indépendant selon l'une quelconque des revendications précédentes,
**caractérisé en ce que** l'énergie pour faire fonctionner le couplage électromagnétique est mise à disposition par un accumulateur électrique et/ou par le producteur primaire d'énergie.

12. Réseau indépendant selon l'une quelconque des revendications précédentes,
**caractérisé en ce qu'**une installation de dessalement de l'eau de mer/de production d'eau à usage industriel est raccordée au réseau indépendant, laquelle produit de l'eau à usage industriel (eau potable) lorsque l'offre de puissance du producteur primaire d'énergie est supérieure à la puissance consommée de l'autre utilisateur électrique raccordé au réseau indépendant.

13. Réseau indépendant selon l'une quelconque des revendications précédentes,
**caractérisé en ce qu'**une centrale électrique à accumulation par pompage est prévue, qui obtient son énergie électrique du producteur primaire d'énergie.

14. Procédé pour régler un réseau électrique indépendant avec au moins un premier producteur d'énergie, qui utilise une source d'énergie renouvelable, le producteur d'énergie étant une installation d'énergie éolienne dotée d'un générateur, un deuxième générateur étant prévu, lequel peut être couplé à un moteur à combustion interne par le biais d'un couplage électromagnétique pour être utilisé comme créateur de réseau, et un élément électrique en tant qu'accumulateur intermédiaire, comprenant les étapes consistant à :
régler l'installation d'énergie éolienne en ce qui concerne sa vitesse de rotation et la modification du réglage des pales,
commander l'installation d'énergie éolienne de sorte qu'elle ne produise continuellement que la puissance électrique nécessaire, la puissance électrique nécessaire étant constituée de la consommation de la puissance électrique dans le réseau ainsi que du besoin en énergie pour charger l'élément électrique en tant qu'accumulateur intermédiaire,
brancher le moteur à combustion interne uniquement lorsque les producteurs d'énergie (10, 12) utilisant les sources d'énergie renouvelables et/ou que la puissance fournie par les accumulateurs intermédiaires électriques (14, 16, 18) sont inférieurs à une valeur seuil pouvant être prédéfinie pour une période pouvant être prédéfinie.

15. Procédé selon la revendication 14,
**caractérisé en ce que**, pour charger les accumulateurs intermédiaires à partir de sources d'énergie renouvelables, plus d'énergie est produite qu'il n'est nécessaire pour les utilisateurs sur le réseau.
